# FASCICULE DE BREVET EUROPEEN

(11) **EP 1 627 017 B1**
(45) Date de publication et mention de la délivrance du brevet: **02.08.2006**
(21) Numéro de dépôt: 04742732.3
(22) Date de dépôt: 14.05.2004
(51) Int. Cl.: C08L 71/12, C08K 7/04, C08K 3/24, H01B 3/30

(54) **CONDUCTEUR ELECTRIQUE REVETU D'UNE COUCHE ADHERENTE ET PROCEDE DE FABRICATION D'UN TEL CONDUCTEUR ELECTRIQUE**
ELEKTRISCHE LEITUNG BESCHICHTET MIT EINER HAFTENDEN SCHICHT UND HERSTELLUNGSPROZESS DAVON
ELECTRIC CONDUCTOR PROVIDED WITH AN ADHERENT LAYER AND METHOD FOR THE PRODUCTION OF SAID ELECTRIC CONDUCTOR

(30) Priorité: 16.05.2003 FR 0305928
(43) Date de publication de la demande: 22.02.2006
(73) Titulaire: Nexans, Societe Anonyme, 75008 Paris (FR)
(72) Inventeur: FOURNIER, Jérôme, F-69003 Lyon (FR); PIECHACZYK, Arnaud, F-69006 Lyon (FR); PINTO, Olivier, F-69003 Lyon (FR); PASCAULT, Jean-Pierre, F-69100 Villeurbanne (FR); FENOUILLOT, Françoise, F-38080 l'Isle d'Abeau (FR); TRIBUT, Laurent, F-39100 Dole (FR)
(74) Mandataire: Feray, Valérie
(86) Numéro de dépôt international: PCT/FR2004/001183
(87) Numéro de publication internationale: WO 2004/104101

(56) Documents cités:
- GB-A- 945 834
- US-A- 3 989 610
- US-A- 4 420 536
- US-A- 5 750 257
- US-A1- 2003 018 131

## Description

La présente invention concerne un conducteur électrique revêtu d'une couche adhérente ainsi que le procédé de fabrication d'un tel conducteur électrique.

Dans la fabrication des moteurs électriques, on incorpore la plus grande quantité de fil de bobinage possible dans le coeur du stator.

Le fil de bobinage, également appelé fil émaillé, utilisé dans ces moteurs électriques ou encore dans des déviateurs électromagnétiques de télévision est typiquement constitué d'un mince fil électrique, souvent en cuivre, revêtu d'une ou de plusieurs couches d'isolation de faible épaisseur.

Pour obtenir les caractéristiques électriques, thermiques et mécaniques souhaitées, une ou plusieurs de ces couches d'isolation sont par exemple en polyuréthane, en polyvinyle acétal formal, en polyester, en polyester imide ou en polyamide imide, ces familles de matériaux étant de classes thermiques différentes variant de 120°C à 200°C. Pour maintenir le bobinage, on utilise une couche extérieure en un polymère thermoplastique thermo-adhérent (self-bonding en anglais), tel que certains polyamides dont le p oint de fusion est d e l'ordre d e 150°C à 190°C. Cette couche thermo-adhérente, c'est-à-dire collante sous l'effet de la chaleur, assure ainsi le collage des spires entre elles et garantit un maintien des spires en un ensemble figé. Cette couche thermo-adhérente vient au-dessus des couches d'isolation précitées.

Le document US4420536 divulgue un fil émaillé dont la couche thermo-adhérente est en nylon 6-12.

Pour fabriquer ce type de bobine, on applique d'abord sur le fil de cuivre une ou plusieurs couches de vernis d'émaillage qui, après passage dans un four, forment des couches d'isolation; on applique ensuite le polymère thermo-adhérent en solution puis on réalise le bobinage. Pour le collage, un courant électrique est envoyé dans la bobine dont les spires sont généralement maintenues en pression les unes contre les autres, et provoque par effet Joule la fusion du polymère thermo-adhérent. Après refroidissement, les spires sont jointives et l'ensemble est à la fois figé et protégé.

Le collage peut aussi être réalisé par passage dans un four comme proposé dans le document US4420536.

Cependant, la bobine précédemment décrite n'est pas vouée à des applications à hautes températures de fonctionnement par exemple pour les rotors et les stators d'un alternateur d'automobile, ces derniers atteignant ou dépassant très largement la température de fusion du polymère thermo-adhérent.

Pour obtenir la tenue en température de bobines, on utilise un autre type de fil de bobinage. Il s'agit d'un fil électrique préalablement revêtu d'une couche classique d'isolation et bobiné et qui est trempé dans un vernis d'imprégnation à base d'une résine par exemple polyester insaturée ou époxyde dans un solvant. Un traitement thermique ultérieur permet l'évacuation du solvant et le durcissement de la résine. Ce procédé de fabrication, réalisé par l'utilisateur du fil, est contraignant, long, difficile à mettre en oeuvre, et nuisible à l'environnement du fait des rejets de solvant dans l'atmosphère.

L'objet de l'invention est de pallier ces problèmes et plus largement de mettre au point un conducteur électrique revêtu d'une couche adhérente et résistante aux hautes températures et pouvant être obtenu selon un procédé simple de manière à former un fil de bobinage ou un câble d'énergie et/ou de télécommunications

Dans tout ce qui suit, on entend par résistant aux hautes températures, une matière plastique stable thermiquement c'est-à-dire conservant de bonnes propriétés mécaniques lorsqu'elle est soumise à des hautes températures, typiquement supérieures à 150°C, même pendant une longue durée par exemple après des dizaines de milliers d'heures.

L'invention propose à cet effet un conducteur électrique revêtu d'une couche d'isolation elle-même revêtue d'une couche adhérente **caractérisé en ce que** ladite couche adhérente est obtenue à partir d'une composition comprenant un polymère thermoplastique et une résine durcissable.

La couche d'isolation s'entend comme électriquement isolante.

La couche obtenue à partir de la composition selon l'invention est résistante aux hautes températures : sa mobilité moléculaire est faible même à haute température, ce qui est avantageux tant dans les applications de câbles que pour les fils de bobinage.

On entend par résine durcissable une matière plastique qui au cours de sa mise en oeuvre subit une transformation irréversible : d'un état initial liquide elle passe, par un traitement de durcissement approprié (action de la chaleur et/ ou d'un rayonnement de type ultraviolet, réaction avec un composé réticulant) à un état solide irréversible. Ce traitement de durcissement correspond à une polymérisation et plus précisément à une réticulation (thermoréticulation et/ou photoréticulation). Il en résulte la formation d'un réseau tridimensionnel.

La résine durcissable va, en réticulant, former des liens chimiques forts et irréversibles et confère à la couche finale une excellente tenue. Plus le taux de réticulation est important plus les propriétés thermiques et mécaniques de la couche finale adhérente sont bonnes.

La résine durcissable amène une irréversibilité de l'adhérence même à température élevée.

De préférence, la résine durcissable peut être une résine photoréticulable ou thermodurcissable (thermosetting en anglais).

La couche adhérente selon l'invention peut être qualifiée de « thermo-adhérente » lorsque la résine choisie est thermodurcissable et/ou le polymère thermoplastique est thermo-adhérent.

Lorsque le polymère thermoplastique est choisi semi-cristallin et que la résine est thermodurcissable, le chauffage direct ou indirect pour la réticulation conduit au ramollissement du thermoplastique qui participe ainsi au collage.

Dans un mode de réalisation avantageux, le polymère thermoplastique présente une température de transition vitreuse (Tg) supérieure ou égale à 150°C.

La transition vitreuse est un changement réversible dans un polymère amorphe ou dans les parties amorphes d'un polymère semi-cristallin, de (ou vers) l'état visqueux vers (ou de) l'état dur et relativement fragile.

Ainsi, un polymère amorphe reste rigide jusqu'à cette température de transition vitreuse élevée Tg. De cette façon, Une température vitreuse Tg élevée contribue aussi à conférer aux hautes températures des propriétés mécaniques satisfaisantes à la couche adhérente finale.

On peut citer à titre d'exemple le polyétherimide (PEI) qui est un polymère amorphe de température de transition vitreuse Tg de l'ordre de 220°C.

De préférence, lorsque le polymère thermoplastique est semi-cristallin, ce dernier peut présenter une température de fusion supérieure ou égale à 200°C.

On peut citer par exemple le polyéthylène téréphtalate (PET) qui est un polymère semi-cristallin de température de fusion de l'ordre de 240°C.

Selon une caractéristique avantageuse, le polymère thermoplastique peut être de préférence au moins partiellement soluble dans la résine durcissable ce qui permet de former, avant réticulation, un mélange homogène.

Par ailleurs, le polymère thermoplastique peut être choisi de préférence parmi l'un ou plusieurs des polymères suivants : les polystyrènes, les polyétheréthercétones les polyétherimides et les polyamides, les polyoléfines et les copolymères de polyoléfines, les polysulfones, les polyuréthanes, les polyesters, les oligoesters cycliques, les polyimides et les copolymères de polyimides, les polyphénylènes éthers, les polyphtalamides, les polychlorures de vinyle, les polyacryliques , les polyméthacryliques et les polycarbonates.

La résine durcissable est choisie parmi les résines époxydes, les résines de vinyls ester, les résines polyester insaturées, les résines phénoliques, les résines alkyles, les résines acryliques, les cyanates esters et les benzoxazines.

Parmi les polyimides (Pl) et les copolymères de polyimides on peut citer par exemple le polyétherimide (PEI), le potyesterimide et le polyamide-imide.

La famille des polyesters comprend notamment le polyéthylène téréphtalate (PET) et le polybutylène téréphtalate (PBT).

Le polyéthersulfone (PES) et le polyphénylènesulfone font partie de la famille des polysulfones.

Lorsque la résine est thermodurcissable, la composition peut comprendre l'un au moins des composés suivants : un composé réticulant qui est réactif chimiquement avec ladite résine thermodurcissable et un catalyseur de réticulation, ou les deux.

La résine thermodurcissable peut être pré-mélangée avec le composé réticulant, autrement appelé durcisseur, et éventuellement un catalyseur de réticulation.

Le composé réticulant peut aussi être le polymère thermoplastique.

Dans un mode de réalisation préféré, la résine est thermodurcissable et est un homopolyépoxyde et de préférence un diglycidyl éther de bisphénol A et le composé réticulant est choisi parmi les composés d'amines, les anhydrides carboxyliques et les polyamides.

La composition selon l'invention peut contenir de 30 à 60% de parts en poids d'oxyde de polyphénylène et de 70 à 40% de parts en poids d'un mélange contenant du diglycidyl éther de bisphénol A et une amine choisie parmi la 4,4'-méthylènebis-(2,6-diéthyl) benzènamine et la 4,4'-méthylènebis-(3-chloro-2,6-diéthyl) benzènamine.

La résine durcissable peut aussi être une résine photoréticulable choisie parmi l'une des résines suivantes : les résines acrylates, les résines méthacrylates, les époxydes et les éthers vinyliques.

Par exemple, des uréthane acrylates, des polyester acrylates ou des polyether acrylates peuvent être des résines acrylates photoréticulables.

Lorsque la résine est photoréticulable, la composition peut comprendre un photoinitiateur et éventuellement un catalyseur de réticulation.

Le conducteur électrique revêtu selon l'invention peut être par exemple un conducteur de câble d'énergie et/ou télécommunications, un fil émaillé de bobinage.

La couche adhérente finale peut servir pour un gainage et/ou une isolation, suivant les applications, mais le conducteur électrique selon l'invention comprend toujours au moins une couche d'isolation électrique sous-jacente. En effet, si la couche thermo-adhérente selon l'invention était déposée directement sur le conducteur électrique, lors du chauffage en vue du collage, les différentes spires seraient en contact électrique les unes avec les autres, ce qui est incompatible avec l'application aux fils émaillés.

En revanche, un conducteur électrique selon l'invention peut comporter d'autres couches entre la couche d'isolation et la couche thermo-adhérente.

L'invention s'applique également à un procédé de fabrication d'un conducteur électrique revêtu d'une couche adhérente caractérisé en ce qu'il comprend une application de la composition telle que définie précédemment sur ledit conducteur et un traitement pour une réticulation au moins partielle de ladite résine durcissable.

L'application de la composition est réalisée par exemple par injection ou extrusion de la composition selon l'invention. La résine durcissable permet la mise en oeuvre d'un thermoplastique à haute température de transition vitreuse.

En outre une résine thermodurcissable est très liquide et seule ne tient pas sur un conducteur.

L'invention rend inutile toute imprégnation ultérieure.

Pour son application, la composition peut être dispersée dans un solvant évaporable ou mise en solution.

La résine peut commencer à réticuler pendant l'application. Toutefois, les conditions de l'application peuvent être aisément ajustées pour limiter le taux de réticulation de la résine, par exemple en dessous de 20 à 25 %.

La réticulation amenant à l'adhérence s'opère par chauffage direct ou par l'application d'un courant électrique dans un fii électrique par exemple pour les applications de bobine, et/ou encore par rayonnement de type ultraviolet.

Le type de traitement, la durée du traitement et le cas échéant, la température de chauffage sont choisis en fonction de la résine durcissable.

D'autres caractéristiques et avantages de la présente invention apparaîtront dans la description suivante des exemples donnés à titre illustratif et nullement limitatif.

La figure 1 montre une vue en coupe transversale d'un conducteur électrique selon l'invention pouvant servir de fil émaillé de bobinage dans un mode de réalisation préféré de l'invention.

La figure 2 montre l'évolution en fonction de la température du module de conservation de couches adhérentes.

Le fil émaillé de bobinage 1 comprend un conducteur électrique 2, en cuivre par exemple, revêtu d'une couche d'isolation 3 en vernis émaillé classique, elle-même revêtue d'une couche 4 en une composition selon l'invention décrite ci-après dans l'exemple n°1. La couche 4 est destinée à former une couche adhérente.

### Exemple n°1

Dans ce premier exemple, la composition est un mélange homogène de formulation suivante:
- 30 à 60% de parts en poids de polymère thermoplastique de préférence à haute température de transition vitreuse et/ou à haute température de fusion et de préférence 40% d'oxyde de polyphénylène (PPO) autrement appelé polyphénylène éther, par exemple le produit Noryl PPO 820 de la société Général Electric Plastics,
- 40 à 70% de parts en poids d'un mélange qui contient une résine durcissable et par exemple thermodurcissable et de préférence:
   - 41,8% d'une résine thermodurcissable telle que le diglycidyl éther de bisphénol A (DGBEA), par exemple ie produit D.E.R. 330 de la société Dow Chemical,
   - 18,2% d'un composé réticulant qui est réactif chimiquement avec la résine thermodurcissable tel qu'une amine, par exemple le 4,4'-méthylènebis-(2,6-diéthyl) benzènamine comme le produit Lonzacure MDEA de la société Lonza.

Le polyphénylène éther choisi est un polymère amorphe qui présente, pur, une température de transition vitreuse de 210°C.

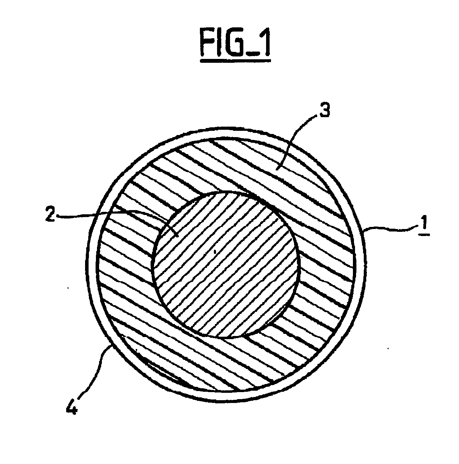

La fabrication d'un fil émaillé bobiné à partir du fil de bobinage présenté en figure 1 est simple, rapide et propre et peut être réalisée par l'utilisateur lui-même.

Ce fil émaillé, après son bobinage, est traité thermiquement c'est-à-dire chauffé à 200°C dans un four pendant au moins 30 minutes et de préférence pendant une heure pour augmenter le taux de réticulation de la résine thermodurcissable.

Le fil bobiné et traité comprend une couche thermo-adhérente et résistante aux hautes températures et convient ainsi pour tous types de moteurs électriques et déviateurs électromagnétiques de télévision.

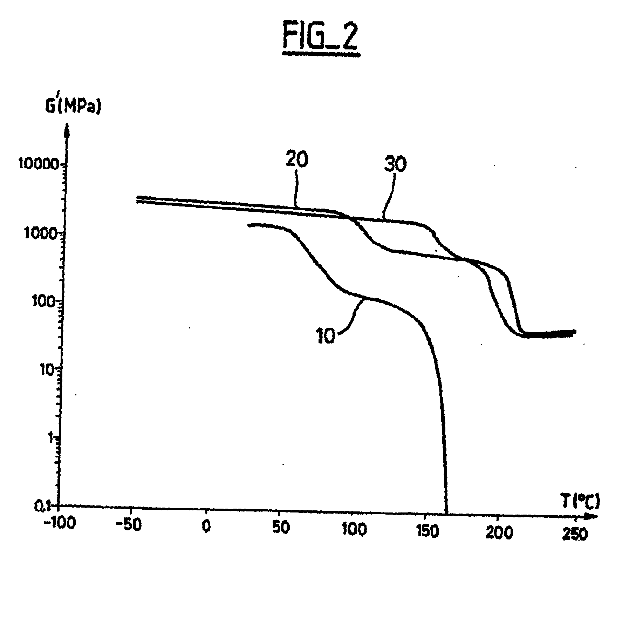

Sur la figure 2 sont représentées trois courbes 10, 20, 30 montrant l'évolution du module de conservation G' (en MPa) en fonction de la température (°C) de trois couches adhérentes sur des fils conducteurs émaillés.

Une première courbe 10 montre le module de conservation d'une couche thermo-adhérente classique dite A en un polyamide standard. Une deuxième courbe 20 montre le module de conservation d'une couche thermoadhérente dite B obtenue à partir de la composition selon l'invention de l'exemple n°1, et traitée thermiquement à 200°C pendant 30 minutes. Une troisième courbe 30 montre le module de conservation d'une couche thermo-adhérente dite C obtenue à partir de la composition selon l'invention décrite ci-dessus dans l'exemple n°1 et traitée thermiquement à 200°C pendant 60 minutes.

L'évolution d'un module de conservation en fonction de la température renseigne sur la capacité de collage et la résistance aux hautes températures d'une couche. Le module de conservation G' est obtenu par analyse mécanique dynamique.

En relation avec la première courbe 10, on voit qu'à température ambiante, le module de conservation est supérieur à 1000 MPa : la couche A est rigide. Entre 50°C et 110°C environ, on observe une première chute de ce module jusqu'à 100 MPa: c'est la phase de transition vitreuse, la couche A est ramollie, il y a mobilité moléculaire. A partir de 150°C environ, intervient une deuxième chute, brutale, du module: c'est la phase de fusion, la couche A n'a plus de cohésion et devient liquide.

Le module de conservation présenté sur la deuxième courbe 20 est supérieur à 2000 MPa sur une large gamme de température allant de -50°C à 90°C environ: la couche B est très rigide. Entre de 90° C et 110°C, on observe une première chute de ce module jusqu'à une valeur d'environ 600 MPa,: la couche B reste toutefois relativement rigide. Après un large palier de stabilisation des propriétés thermomécaniques intervient, à partir de 180°C environ, une deuxième chute du module. Au delà de 200°C, la couche B garde une certaine rigidité.

Le module de conservation présenté sur la troisième courbe 30 est supérieur à 2000 MPa sur une large gamme de température allant de -50°C à 150°C: la couche C est très rigide.

Le choix de la température de chauffage et de la durée de chauffage dépend du mélange choisi et des spécifications recherchées.

On donne ci-dessous trois autres exemples de compositions selon l'invention.

### Exemple n°2

On prépare d'abord une composition selon l'invention dans un solvant.

Dans un réacteur tricol équipé d'un agitateur, d'un réfrigérant, d'une sonde de température, on charge 750g d'un solvant de préférence le toluène puis on chauffe à 60°C. Tout en maintenant ia température à 60°C, on ajoute progressivement et sous agitation par l'intermédiaire d'une ampoule à poudre 150g de polymère thermoplastique tel que le polyphénylène éther par exemple le produit Noryl PPO 820 déjà décrit dans l'exemple n°1. La durée d'introduction est de 30 minutes. On laisse le mélange sous agitation jusqu'à disparition des particules de poudre non dissoutes.

Par l'intermédiaire d'une ampoule de coulée, on ajoute progressivement en 20 minutes, sous agitation mécanique et en maintenant le milieu à 60°C, 147g de résine thermodurcissable telle que le diglycidyl éther de bisphénol A (DGBEA), par exemple le produit D.E.R. 330 déjà décrit dans l'exemple n°1. Le mélange est maintenu agité pendant 10 minutes, puis on introduit progressivement en 15 minutes par l'intermédiaire d'une ampoule à poudre 78g d'un composé réticulant réactif chimiquement avec la résine thermodurcissable, par exemple l'amine 4,4'-méthylènebis-(3-chloro-2,6-diethyl) benzènamine comme le produit Lonzacure MCDEA de la société Lonza.

Le mélange est maintenu à 60°C sous agitation mécanique pendant 10 minutes avant d'être soutiré dans un cristallisoir.

Ensuite, le toluène est évaporé sous vide. Le rendement de mélange est proche de 100%.

### Exemple n°3

On prépare d'abord une composition selon l'invention dans un solvant.

Dans un réacteur tricol équipé d'un agitateur, d'un réfrigérant, d'une sonde de température, on charge 750g de toluène puis on chauffe à 60°C. Tout en maintenant la température à 60°C, on ajoute progressivement et sous agitation par l'intermédiaire d'une ampoule à poudre 150g de polymère thermoplastique tel que le polyphénylène éther par exemple le produit Noryl PPO 820 déjà décrit dans l'exemple n°1. La durée d'introduction est de 30 minutes. Le mélange est laissé sous agitation jusqu'à disparition de particule de poudre non dissoute.

Par l'intermédiaire d'une ampoule de coulée, on ajoute progressivement en 15 minutes, sous agitation mécanique et en maintenant le milieu à 60°C, 100g de résine photoréticulable telle que le diglycidyl éther de bisphénol A (DGBEA),par exemple le produit D.E.R. 330 (Dow Chemical). Le mélange est maintenu agité pendant 10 minutes puis on introduit progressivement par l'intermédiaire d'une ampoule à poudre en 5 minutes 2g d'un photoinitiateur, par exemple le produit Rhodorsil Photoinitiator 2074 de la société Rhodia.

Le mélange est maintenu à 60°C sous agitation mécanique pendant 10 minutes avant d'être soutiré dans un cristallisoir.

Ensuite, le toluène est évaporé sous vide. Le rendement de mélange est proche de 100%.

### Exemple n°4

Dans la trémie d'alimentation en tête d'une extrudeuse à double vis co-rotatives équipée de 9 zones de chauffe successives respectivement à 60°C, 160°C, 190°C, 190°C, 180°C, 180°C, 180°C, 180°C et 180°C entre la première zone et la neuvième zone, deux zones d'alimentation et deux puits de dégazage, est introduit par doseur pondéral un mélange composé de :
- 1800g d'un polymère thermoplastique tel que le polyphénylène éther, par exemple le Noryl PPO 820, sous forme poudre,
- et de 398g d'un 4,4'-méthylènebis-(2,6-diéthyl) benzènamine comme le produit Lonzacure MDEA déjà décrit dans l'exemple n°1, sous forme de poudre, à un débit de 20g/min.

Simultanément, on introduit progressivement, à un débit de 13,3g/min et en deuxième zone à l'aide d'une pompe à engrenage, 802g de résine thermodurcissable portée à 80°C telle que le diglycidyl éther de bisphénol A (DGBEA), par exemple la résine D.E.R. 330.

La filière est une filière à jonc qui permet d'obtenir des granulés réguliers.

### Tests

Les matériaux obtenus dans les exemples 2 et 4 ci-dessus sont soumis à des traitements thermiques qui permettent d'ajuster leurs propriétés mécaniques.

Le module élastique G' de ces matériaux est déterminé par analyse dynamique mécanique en mode dual cantilever à l'aide de l'appareil DMA 2980 (TA Instruments) sous une fréquence de sollicitation de 1Hz et une amplitude de 100µm sur une plage de température variant à 3°C/min entre - 50°C et 250°C.

Un polyamide standard de l'art antérieur sert de matériau étalon.

Les résultats obtenus sont rassemblés dans le tableau 1 ci-dessous :

**Tableau 1**

| | Traitement thermique | G' à 25°C (MPa) | G' à 100°C (MPa) | G' à 150°C (MPa) |
|---|---|---|---|---|
| Exemple 2 | 60 minutes | 2772 | 636 | 434 |
| | 200°C | | | |
| | 90 minutes | 2625 | 2017 | 522 |
| | 200°C | | | |
| | 120 minutes | 2291 | 1817 | 1474 |
| | 200°C | | | |
| Exemple 4 | 30 minutes | 2696 | 1418 | 589 |
| | 200°C | | | |
| | 60 minutes | 2275 | 1841 | 1190 |
| | 200°C | | | |
| Polyamide standard | ----- | 848 | 218 | 164 |

Le module de conservation des matériaux des exemples n°2 et n°4 est nettement supérieur, à 25°C comme à 150°C, à celui du polyamide standard.

Bien entendu, la présente invention n'est pas limitée aux exemples de réalisation qui viennent d'être décrits.

L'invention s'applique aussi bien aux câbles d'énergie, de télécommunications pour leurs couches de gainage et/ou d'isolation.

Enfin, on pourra remplacer tout moyen par un moyen équivalent sans sortir du cadre de la présente invention.

## Revendications

1. Conducteur électrique revêtu d'une couche d'isolation elle-même revêtue d'une couche adhérente **caractérisé en ce que** ladite couche adhérente est obtenue à partir d'une composition comprenant un polymère thermoplastique et une résine durcissable.

2. Conducteur électrique seion ia revendication 1 **caractérisé en ce que** la résine durcissable est photoréticulable ou thermodurcissable.

3. Conducteur électrique selon l'une des revendications 1 ou 2 **caractérisé en ce que** le polymère thermoplastique présente une température de transition vitreuse supérieure ou égale à 150°C.

4. Conducteur électrique selon l'une des revendications 1 à 3 **caractérisé en ce que** lorsque le polymère thermoplastique est semi-cristallin, le polymère thermoplastique présente une température de fusion supérieure ou égale à 200°C.

5. Conducteur électrique selon l'une des revendications 1 à 4 **caractérisé en ce que** le polymère thermoplastique est au moins partiellement soluble dans la résine durcissable.

6. Conducteur électrique selon l'une des revendications 1 à 5 **caractérisé en ce que** le polymère thermoplastique est choisi parmi l'un ou plusieurs des polymères suivants les polystyrènes, les polyétheréthercétones les polyétherimides, les polyamides, les polyoléfines et les copolymères de polyoléfines, les polysulfones, les polyuréthanes, les polyesters, les oligoesters cycliques, les polyimides et les copolymères de polyimides, les polyphénylènes éthers, les polyphtalamides, les polychlorures de vinyle, les polyacryliques, les polyméthacryliques et les polycarbonates.

7. Conducteur électrique selon l'une des revendications 1 à 6 **caractérisé en ce que** la résine durcissable est choisie parmi les résines époxydes, les résines de vinyls esters, les résines polyester insaturées, les résines phénoliques, les résines alkyles, les résines acryliques, les cyanates esters et les benzoxazines.

8. Conducteur électrique selon l'une des revendications 1 à 7 **caractérisé en ce que**, la résine étant thermodurcissable, ladite composition comprend l'un au moins des composés suivants : un composé réticulant qui est réactif chimiquement avec ladite résine durcissable et un catalyseur de réticulation.

9. Conducteur électrique seion la revendication 8 **caractérisé en ce que** la résine est thermodurcissable et est un homopolyépoxyde et de préférence un diglycidyl éther de bisphénol A et le composé réticulant est choisi parmi les composés d'amines, les anhydrides carboxyliques et les polyamides.

10. Conducteur électrique selon l'une des revendications 1 à 9 **caractérisé en ce que** ladite composition contient de 30 à 60% de parts en poids d'oxyde de polyphénylène et de 70 à 40% de parts en poids d'un mélange contenant du diglycidyl éther de bisphénol A et une amine choisie parmi la 4,4'-méthylènebis-(2,6-diéthyl) benzènamine et la 4,4'-méthylènebis-(3-chloro-2,6-diéthyl) benzènamine.

11. Conducteur électrique selon l'une des revendications 1 à 6 **caractérisé en ce que** la résine durcissable est une résine photoréticulable choisie parmi l'une des résines suivantes : les résines acrylates, les résines méthacrylates, les époxydes et les éthers vinyliques.

12. Conducteur électrique selon l'une des revendications 1 à 6 **caractérisé en ce que**, la résine étant photoréticulable, la composition comprend un photoinitiateur.

13. Procédé de fabrication d'un conducteur électrique (1, 2) revêtu d'une couche adhérente (4) selon l'une des revendications 1 à 12 **caractérisé en ce qu**'il comprend une application de ladite composition sur ledit conducteur électrique revêtu de ladite couche d'isolation et un traitement pour une réticulation au moins partielle de ladite résine durcissable.

14. Procédé selon la revendication 13 **caractérisé en ce que** le traitement pour une réticulation est choisi parmi l'un au moins des traitements suivants : un traitement thermique, un rayonnement de type ultraviolet.

## Claims

1. An electrical conductor coated with an insulation layer itself coated with an adherent layer, **characterized in that** said adherent layer is obtained from a composition comprising a thermoplastic polymer and a setting resin.

2. The electrical conductor according to claim 1, **characterized in that** the setting resin is photo-crosslinkable or thermosetting.

3. The electrical conductor according to any of claims 1 or 2, **characterized in that** the thermoplastic polymer has a glass transition temperature larger than or equal to 150°C.

4. The electrical conductor according to any of claims 1 to 3, **characterized in that** the thermoplastic polymer is semi-crystalline, the thermoplastic polymer has a melting temperature larger than or equal to 200°C.

5. The electrical conductor according to any of claims 1 to 4, **characterized in that** the thermoplastic polymer is at least partially soluble in the setting resin.

6. The electrical conductor according to any of claims 1 to 5, **characterized in that** the thermoplastic polymer is selected from one or several polymers from the following polymers, polystyrenes, polyetheretherketones, polyetherimides, polyamides, polyolefins, and copolymers of polyolefins, polysulfones, polyurethanes, polyesters, cyclic oligoesters, polyimides, and copolymers of polyimides, polyphenylene ethers, polyphtalamides, polyvinyl chlorides, polyacrylics, polymethacrylics, and polycarbonates.

7. The electrical conductor according to any of claims 1 to 6, **characterized in that** the setting resin is selected from epoxide resins, vinyl ester resins, unsaturated polyester resins, phenolic resins, alkyl resins, acrylic resins, ester cyanates and benzoxazines.

8. The electrical conductor according to any of claims 1 to 7, **characterized in that**, as the resin is thermosetting, said composition comprises at least one of the following compounds: a cross-linking compound which is chemically reactive with said setting resin, and a cross-linking catalyst.

9. The electrical conductor according to claim 8, **characterized in that** the resin is thermosetting and is a homopolyepoxide and preferably a bisphenol A diglycidyl ether and the cross-linking compound is selected from amine compounds, carboxylic anhydrides and polyamides.

10. The electrical conductor according to any of claims 1 to 9, **characterized in that** said composition contains from 30 to 60% parts by weight of polyphenylene oxide and from 70 to 40% parts by weight of a mixture containing bisphenol A diglycidyl ether and an amine selected from 4,4'-methylene-bis-(2,6-diethyl) benzenamine and 4,4'-methylene-bis-(3-chloro-2,6-diethyl) benzenamine.

11. The electrical conductor according to any of claims 1 to 6, **characterized in that** the setting resin is a photo-crosslinkable resin selected from one of the following resins: acrylate resins, methacrylate resins, epoxides and vinyl ethers.

12. The electrical conductor according to any of claims 1 to 6, **characterized in that**, as the resin is photo-crosslinkable, the composition comprises a photo initiator.

13. A method for manufacturing an electrical conductor (1,2) coated with an adherent layer (4) according to any of claims 1 to 12, **characterized in that** it comprises an application of said composition on said electrical conductor coated with said insulation layer and a treatment for at least partially cross-linking said setting resin.

14. The method according to claim 13, **characterized in that** the cross-linking treatment is selected from at least one of the following treatments: heat treatment, ultraviolet type radiation.

## Patentansprüche

1. Elektrischer Leiter, überzogen mit einer Isolationsschicht, die ihrerseits mit einer haftenden Schicht überzogen ist, **dadurch gekennzeichnet, dass** die haftende Schicht aus einer Zusammensetzung erhalten ist, die ein thermoplastisches Polymer und ein härtbares Harz umfasst.

2. Elektrischer Leiter nach Anspruch 1, **dadurch gekennzeichnet, dass** das härtbare Harz durch Licht vernetzbar oder thermisch härtbar ist.

3. Elektrischer Leiter nach einem der Ansprüche 1 oder 2, **dadurch gekennzeichnet, dass** das thermoplastische Polymer eine Glasübergangstemperatur von 150°C oder darüber hat.

4. Elektrischer Leiter nach einem der Ansprüche 1 bis 3, **dadurch gekennzeichnet, dass** wenn das thermoplastische Polymer semikristallin ist, das thermoplastische Polymer eine Schmelztemperatur von 200°C oder darüber aufweist.

5. Elektrischer Leiter nach einem der Ansprüche 1 bis 4, **dadurch gekennzeichnet, dass** das thermoplastische Polymer wenigstens teilweise in dem härtbaren Harz löslich ist.

6. Elektrischer Leiter nach einem der Ansprüche 1 bis 5, **dadurch gekennzeichnet, dass** das thermoplastisch Polymer ausgewählt ist unter einem oder mehreren der folgenden Polymere: den Polystyrolen, den Polyetheretherketonen, den Polyetherimiden, den Polyamiden, den Polyolefinen und den Copolymeren von Polyolefinen, den Polysulfonen, den Polyurethanen, den Polyestern, den zyklischen Oligoestern, den Polyimiden und den Copolymeren von Polyimiden, den Polyphenylenethern, den Polyphthalamiden, den Polyvinylchloriden, den Polyacrylen, den Polymethacrylen und den Polycarbonaten.

7. Elektrischer Leiter nach einem der Ansprüche 1 bis 6, **dadurch gekennzeichnet, dass** das härtbare Harz ausgewählt ist unter den Epoxydharzen, den Vinylesterharzen, den ungesättigten Polyesterharzen, den Phenolharzen, den Alkylharzen, den Acrylharzen, den Cyanatestern und den Benzoxazinen.

8. Elektrischer Leiter nach einem der Ansprüche 1 bis 7, **dadurch gekennzeichnet, dass** das Harz thermisch härtbar ist und die Zusammensetzung wenigstens eine der folgenden Verbindungen umfasst: eine vernetzende Verbindung, die chemisch mit dem härtbaren Harz reaktiv ist, und einen Vernetzungskatalysator.

9. Elektrischer Leiter nach Anspruch 8, **dadurch gekennzeichnet, dass** das Harz thermisch härtbar ist und ein Homopolyepoxid und vorzugsweise ein Bisphenol-A-Diglycidylether ist, und dass die vernetzende Verbindung ausgewählt ist unter den Aminverbindungen, den Carboxylanhydriden und den Polyamiden.

10. Elektrischer Leiter nach einem der Ansprüche 1 bis 9, **dadurch gekennzeichnet, dass** das die Zusammensetzung 30 bis 60 Gewichtsprozent Polyphenylenoxid und 70 bis 40 Gewichtsprozent eines Gemischs enthält, welches Bisphenol-A-Diglycidylether und ein Amin enthält, das ausgewählt ist unter 4,4'-Methylenbis-(2,6-Diethyl)-Benzenamin und 4,4'-Methylenbis-(3-Chloro-2,6-Diethyl)-Benzenamin.

11. Elektrischer Leiter nach einem der Ansprüche 1 bis 6, **dadurch gekennzeichnet, dass** das härtbare Harz ein durch Licht vernetzbares Harz ist, das ausgewählt ist unter einem der folgenden Harze: den Acrylatharzen, den Methacrylatharzen, den Epoxiden und den Vinylethern.

12. Elektrischer Leiter nach einem der Ansprüche 1 bis 6, **dadurch gekennzeichnet, dass** das Harz durch Licht vernetzbar ist und die Zusammensetzung einen Photoinitiator umfasst.

13. Verfahren zur Herstellung eines elektrischen Leiters (1, 2), der mit einer Haftschicht (4) überzogen ist, nach einem der Ansprüche 1 bis 12, **dadurch gekennzeichnet, dass** es eine Aufbringung der Zusammensetzung auf dem mit der Isolationsschicht überzogenen elektrischen Leiter und eine Behandlung für eine wenigstens teilweise Vernetzung des härtbaren Harzes umfasst.

14. Verfahren nach Anspruch 13, **dadurch gekennzeichnet, dass** die Vernetzungsbehandlung ausgewählt ist unter wenigstens einer der folgenden Behandlungen: einer thermischen Behandlung, einer Ultraviolettbestrahlung.
